# EUROPEAN PATENT APPLICATION

(11) **EP 4 353 389 A1**
(43) Date of publication of application: **17.04.2024**
(21) Application number: 21945254.7
(22) Date of filing: 28.12.2021
(51) Int. Cl.: B23F 5/04, B23F 5/12

(54) **GEAR-MANUFACTURING APPARATUS, GEAR-MANUFACTURING METHOD, AND THREADED TOOL USED IN SAME**

(30) Priority: 10.06.2021 JP 2021097296
(71) Applicant: JTEKT GEAR SYSTEMS CORPORATION, Seto-shi, Aichi 489-8550 (JP)
(72) Inventor: FUNAHASHI, Kousuke, Seto-shi, Aichi 489-8550 (JP); MARUYAMA, Kenichi, Seto-shi, Aichi 489-8550 (JP); KONDO, Norihiko, Seto-shi, Aichi 489-8550 (JP)
(74) Representative: Winter, Brandl - Partnerschaft mbB
(86) International application number: PCT/JP2021/048952
(87) International publication number: WO 2022/259587

(57) **Abstract**

A gear manufacturing apparatus, which is capable of efficiently forming a tooth surface that does not suffer from breakage due to a phase shift at the start of meshing, is provided.

The present invention provides a gear manufacturing apparatus configured to grind a gear workpiece 9 including teeth 90 formed on its outer circumferential surface, by meshing and rotating the gear workpiece 9 and a threaded tool 8 including one or more spiral processing teeth 80 formed on an outer circumferential surface of a base portion 8A of the tool 8, including: a control device 7 configured to execute a corner portion grinding control in which one corner portion among four corners of each tooth surface of the gear workpiece 9 is ground such that a termination 80z, which is an edge of the processing tooth 80 in a tooth trace direction, comes into contact with the gear workpiece 9, utilizing only a termination tooth surface R1 or R2 in a one-side tooth surface 811a of the processing tooth 80 or the other-side tooth surface 811b of the processing tooth 80, the termination tooth surface R1, R2 being set to include part of the termination 80z and being one closed region.

## Description

### TECHNICAL FIELD

The present invention relates to a gear manufacturing apparatus, a gear manufacturing method, and a threaded tool for use in the apparatus and the method.

### BACKGROUND ART

A gear manufacturing method is disclosed in Japanese Patent Application Publication No. 2017-205871, for instance. Grinding of the gear (such as finishing) is performed by meshing and rotating a gear workpiece with a grinding tool.

### CITATION LIST

### PATENT LITERATURE

Patent Literature 1: Japanese Patent Application Publication No. 2017-205871

### SUMMARY OF THE INVENTION

### Technical Problem

In a mechanism for transmitting a power by meshing gears, a phase shift in meshing is generated due to bending of teeth of the gears when the gears start to mesh each other, namely, at the start of meshing. Due to the phase shift at the start of meshing, the teeth of the respective gears largely interfere with each other, causing a high surface pressure that may lead to breakage of the teeth.

In view of above, it is considered to grind a range of a tooth surface where a high surface pressure is generated at the start of meshing, namely, a portion that is one of four corners of the tooth surface and that corresponds to the start of meshing, i.e., a corresponding corner portion, so as to form a relief shape at the corresponding corner portion of the tooth surface. For forming the relief shape at one of the four corners of the tooth surface by a conventional method, it is required to additionally perform grinding on the one corner portion after completion of finishing for forming a predetermined tooth surface in the gear workpiece, by replacing the tool with another tool (such as a tool dedicated to grind corners) different from the tool used in finishing or by moving the gear workpiece to another device (processing machine). This manufacturing method has a room for improvement in manufacturing efficiency.

It is an object of the present invention to provide a gear manufacturing apparatus, a gear manufacturing method, and a threaded tool for use in the apparatus and the method, which are capable of efficiently forming a tooth surface that does not suffer from breakage due to the phase shift at the start of meshing.

### Solution to Problem

In a first form of the present invention, a gear manufacturing apparatus is configured to grind a gear workpiece including teeth formed on its outer circumferential surface, by meshing and rotating the gear workpiece and a threaded tool including one or more spiral processing teeth formed on an outer circumferential surface of a base portion of the tool. The gear manufacturing apparatus includes a control device configured to execute a corner portion grinding control in which one corner portion among four corners of each tooth surface of the gear workpiece is ground such that a termination, which is an edge of the processing tooth in a tooth trace direction, comes into contact with the gear workpiece, utilizing only a termination tooth surface in a one-side tooth surface of the processing tooth or the other-side tooth surface of the processing tooth, the termination tooth surface being set to include part of the termination and being one closed region.

In a second form of the present invention, a gear manufacturing apparatus includes a control device configured to control a relative position and a relative angle of the tool with respect to the gear workpiece, wherein the control device is configured to execute a corner portion grinding control in which meshing of the processing tooth and the tooth of the gear workpiece starts or ends by contact of a termination, which is an edge of the processing tooth in a tooth trace direction, and one corner portion among four corners of a tooth surface of the gear workpiece.

In a third form of the present invention, a gear manufacturing method uses a gear manufacturing apparatus configured to grind a gear workpiece including teeth formed on its outer circumferential surface, by meshing and rotating the gear workpiece and a threaded tool including one or more spiral processing teeth formed on an outer circumferential surface of a base portion of the tool. The gear manufacturing method includes a corner portion grinding step in which the gear manufacturing apparatus grinds one corner portion among four corners of each tooth surface of the gear workpiece that corresponds to a meshing start position or meshing end position of the gear workpiece and the tool, such that part of a termination comes into contact with the gear workpiece, utilizing only a termination tooth surface in a one-side tooth surface or the other-side tooth surface of the processing tooth, the termination tooth surface being set to include the part of the termination and being one closed region.

In a fourth form of the present invention, a gear manufacturing method includes a corner portion grinding step in which a gear manufacturing apparatus grinds one corner portion among four corners of a tooth surface of the gear workpiece such that meshing of the processing tooth and the tooth of the gear workpiece starts or ends by contact of a termination, which is an edge of the processing tooth in a tooth trace direction, and the one corner portion.

In a fifth form of the present invention, a threaded tool for gear processing includes: a cylindrical or columnar base portion; one or more processing teeth formed integrally on an outer circumferential surface of the base portion so as to spirally extend around the base portion, the threaded tool being configured to rotate in mesh with a gear workpiece to grind a tooth surface of the gear workpiece. The processing tooth includes: a first termination portion including a first termination that is a one-side edge of the processing tooth in a tooth trace direction; a second termination portion including a second termination that is the other-side edge of the processing tooth in the tooth trace direction; and a central portion located between the first termination portion and the second termination portion, and a surface of at least one of the first termination portion and the second termination is entirely covered with a coating layer, and a surface of the central portion is not covered with the coating layer.

In a sixth form of the present invention, a threaded tool for gear processing includes: a cylindrical or columnar base portion; one or more processing teeth formed integrally on an outer circumferential surface of the base portion so as to spirally extend around the base portion, the threaded tool being configured to rotate in mesh with a gear workpiece to process a tooth surface of the gear workpiece. The processing tooth includes: a first termination portion including a first termination that is a one-side edge of the processing tooth in a tooth trace direction; a second termination portion including a second termination that is the other-side edge of the processing tooth in the tooth trace direction; and a central portion located between the first termination portion and the second termination portion, and a material of at least one of the first termination portion and the second termination portion is different from a material of the central portion.

### ADVANTAGEOUS EFFECTS

In the gear manufacturing apparatus according to the first form of the present invention, only the termination tooth surface including part of the termination of the processing tooth is used in grinding in the corner portion grinding control. The termination of the processing tooth is one end of the processing tooth formed by cutting the tool, for instance. Thus, the cut surface of the tool at the termination of the processing tooth is not orthogonal to the tooth trace direction of the processing tooth in view of manufacture of the tool (e.g., due to the lead angle). That is, the cut surface including the termination of the processing tooth is not orthogonal to the tooth trace direction, and the shape of the processing tooth at the termination is incomplete. By using the incomplete shape portion of the processing tooth, only a relief target portion can be ground without bringing the tooth surface of the processing tooth into contact with any portion of the tooth surface of the gear workpiece other than the relief target portion (i.e., one of the four corners). The relief target portion is ground, so that the tooth thickness at the portion in question is reduced, thus preventing breakage of the tooth at the meshing start portion.

Use of the termination tooth surface of the processing tooth eliminates a special tool for grinding the four corners of the tooth surface of the gear workpiece, and the tool that is used to grind other portions can be used in common for grinding the four corners. That is, in grinding the four corners of the tooth surface of the gear workpiece, it is not required to change the tools, thus resulting in efficient grinding. According to the first form, it is possible to efficiently form the tooth surface that can prevent breakage of the tooth due to the phase shift at the start of meshing. This advantage is obtained in the gear manufacturing method according to the third form including a corner portion grinding step that corresponds to the corner portion grinding control of the first form.

In the gear manufacturing apparatus according to the second form of the present invention, the meshing starts or ends at the termination, namely, at the incomplete shape portion of the processing tooth, in the corner portion grinding control. As compared with a case in which the entirety of the tooth surface of the gear workpiece is ground by the processing tooth having a complete shape, the meshing range, i.e., the grinding range, is smaller, thus enabling only the corner portion of the tooth surface to be ground. This offers a similar advantage in the first form. This advantage is offered in a gear manufacturing method according to the fourth form of the present invention including a corner portion grinding step corresponding to the corner portion grinding control of the second form.

In the threaded tool according to the fifth form of the present invention, part of the processing tooth including the termination has enhanced strength owing to the coating layer. Thus, even when the threaded tool is used in the gear manufacturing apparatus that executes the corner portion grinding control, the tool is prevented from being damaged, resulting in an improved life of the tool. Further, because the coating layer is not formed at the central portion of the processing tooth, namely, because the strength of the central portion of the processing tooth is lower than that of the termination portion, the processing tooth is likely to be sharpened during the processing owing to relatively high self sharpening at the central portion which plays a main role in the processing, so that the processing accuracy is likely to be maintained at the central portion.

In the threaded tool according to the sixth form of the present invention, the material of the termination portion and the material of the central portion are different. The termination portion is formed of a material with relatively high strength, so that an advantage similar to the coating layer is obtained. In this configuration,, the termination portion may be formed of a material with relatively low strength. For instance, in a case where the corner portion of the tooth surface is mainly ground with high accuracy, the termination portion is likely to be sharpened owing to relatively high self sharpening if the termination portion is formed of the material with low strength, namely, if the termination portion is formed of a soft material. In this case, the grinding accuracy is improved. According to the sixth form, the strength of the tool can be partially changed depending on the purpose or the control to be used.

### BRIEF DESCRIPTION OF THE DRAWINGS

Fig. 1 is a view illustrating a structure of a gear manufacturing apparatus according to an embodiment in a state in which a gear workpiece is not mounted.
Fig. 2 is a conceptual view of a grinding tool of the embodiment.
Fig. 3 is a conceptual cross-sectional view of the grinding tool of the embodiment.
Fig. 4 is a conceptual view for explaining directions in a tooth of the gear workpiece.
Fig. 5 is a perspective view of the grinding tool of the embodiment.
Fig. 6 is an enlarged conceptual view of a portion in Fig. 5 enclosed with a dotted line.
Fig. 7 is a conceptual cross-sectional view of a termination portion of a processing tooth of the embodiment.
Fig. 8 is conceptual cross-sectional view of the termination portion of the processing tooth of the embodiment.
Fig. 9 is a conceptual view for explaining a corner portion grinding control (executed for a corner portion on a tooth tip side) in the embodiment.
Fig. 10 is a conceptual view for explaining a termination of the processing tooth in the embodiment.
Fig. 11 is a conceptual view for explaining a tooth surface grinding control in the embodiment.
Fig. 12 is a conceptual view illustrating a positional relationship between the gear workpiece and the grinding tool in the tooth surface grinding control in the embodiment.
Fig. 13 is a conceptual view illustrating a positional relationship between the gear workpiece and the grinding tool in the corner portion grinding control in the embodiment.
Fig. 14 is a conceptual view for explaining a meshing advancing direction in a case where the gear workpiece is a driven gear workpiece.
Fig. 15 is a conceptual view for explaining a meshing advancing direction in a case where the gear workpiece is a drive gear workpiece.
Fig. 16 is a conceptual view illustrating one example of a relief target portion in a tooth surface of the gear workpiece.
Fig. 17 is a perspective view of the grinding tool in the embodiment.
Fig. 18 is an enlarged conceptual view of a portion in Fig. 17 enclosed with a dotted line.
Fig. 19 is a conceptual view for explaining the corner portion grinding control (executed for a corner portion on a tooth root side) in the embodiment.
Fig. 20 is a conceptual view for explaining the termination of the processing tooth in the embodiment.
Fig. 21 is a flowchart of one example of a gear manufacturing method of the embodiment.
Fig. 22 is a conceptual view of one example of a shape of a relief portion.
Fig. 23 is a conceptual view of one example of a shape of a relief portion.
Fig. 24 is a conceptual view of the grinding tool according to a modification.

### DETAILED DESCRIPTION OF THE EMBODIMENT

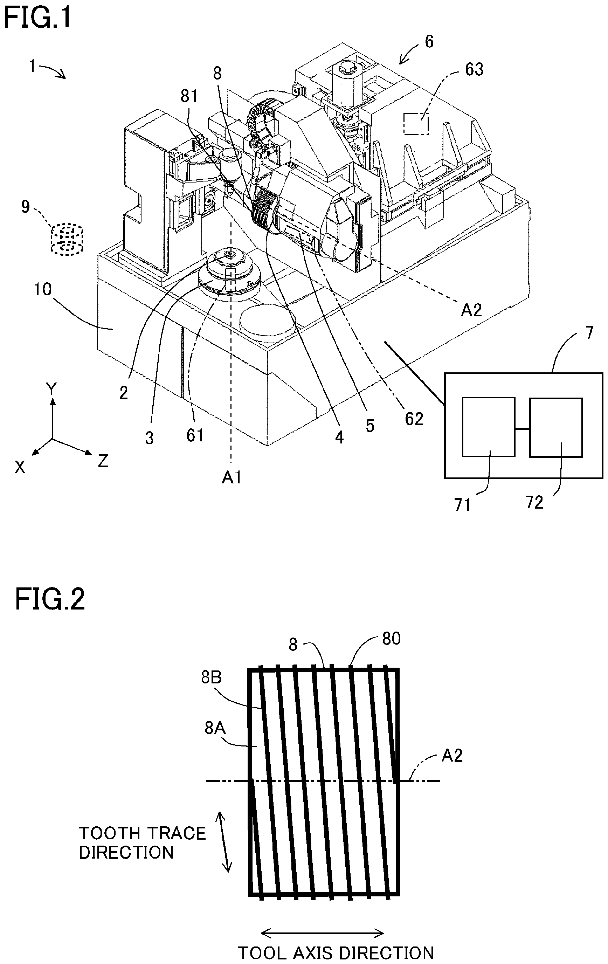

Referring to the drawings, there will be described an embodiment of the present invention. As illustrated in Fig. 1, a gear manufacturing apparatus 1 of the present embodiment includes a first spindle 2, a first holding table 3, a second spindle 4, a second holding table 5, a drive device 6, a control device 7, and a grinding tool 8. The gear manufacturing apparatus 1 grinds the gear workpiece 9 in a state in which the gear workpiece 9 and the grinding tool 8 are rotated in mesh with each other. The gear manufacturing apparatus 1 also includes a dresser or the like. Fig. 1 illustrates the gear manufacturing apparatus 1 in a state in which the gear workpiece 9 is not mounted.

The first spindle 2 is a spindle member to hold the gear workpiece 9 having a plurality of teeth 90. The gear workpiece 9 is a cylindrical gear-like workpiece to be formed into a helical gear (involute gear) by grinding. That is, the gear workpiece 9 includes the teeth 90 with a helical angle formed beforehand on its outer circumferential surface by another processing performed separately. The gear workpiece 9 may be referred to as a ground gear.

The first holding table 3 is a spindle table holding the first spindle 2 such that the first spindle 2 is rotatable about a first axis A1, which is the axis of the first spindle 2. The first axis A1 is a rotation axis of the gear workpiece 9. The first holding table 3 is disposed on an upper surface of a bed 10 (table). The first axis A1 extends in the up-down direction. The first spindle 2 and the first holding table 3 may be referred to as a table axis portion.

The second spindle 4 is a spindle member to hold a grinding tool 8 having spiral processing teeth 80 formed on its outer circumferential surface. The grinding tool 8 has a generally cylindrical shape and is a multi-thread grinding tool or grindstone (as one example of a threaded tool). The grinding tool 8 may be a single-thread grinding tool (with one processing tooth 80). The grinding tool 8 may be referred to as a grinding wheel.

The second holding table 5 is a spindle table holding the second spindle 4 such that the second spindle 4 is rotatable about a second axis A2, which is the axis of the second spindle 4. The second axis A2 corresponds to the center axis (rotation axis) of the grinding tool 8. The first holding table 3 and the second holding table 5 are disposed on the bed 10. The second holding table 5 holds the second spindle 4 such that the second spindle 4 is movable on the bed 10. The extension direction of the second axis A2 corresponding to the axial direction of the grinding tool 8 (hereinafter referred to as "tool axis direction") interests, namely, is not parallel to, the extension direction of the first axis A1 (hereinafter referred to as "workpiece axis direction" where appropriate). The second spindle 4 and the second holding table 5 may be referred to as a main spindle portion.

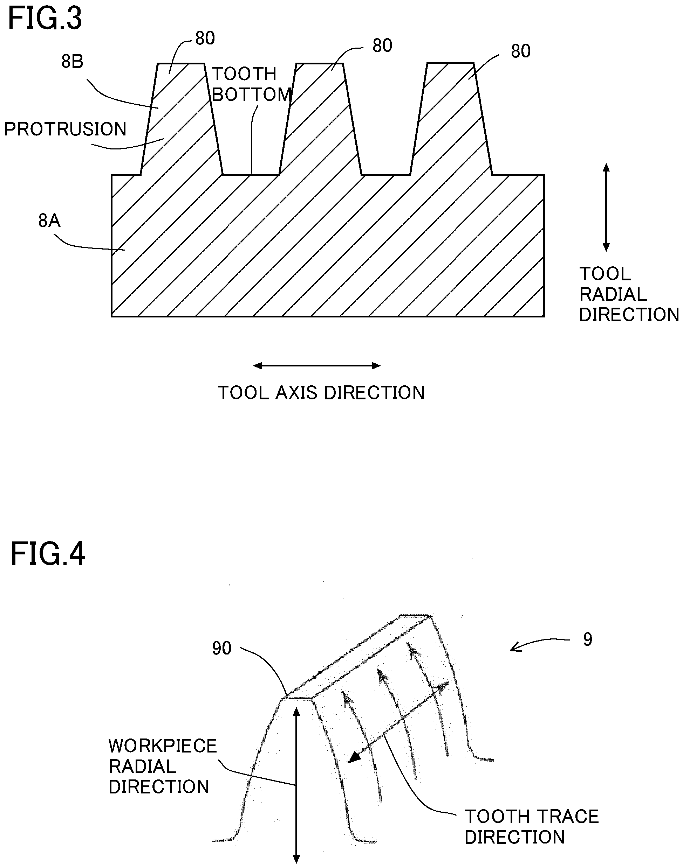

As illustrated in Figs. 2 and 3, the grinding tool 8 is a threaded grinding tool constituted by a cylindrical or columnar base portion 8A and a processing tooth portion 8B that extends radially outwardly from the outer circumferential surface of the base portion 8A. The base portion 8A and the processing tooth portion 8B are integrally formed of the same material. The processing tooth portion 8B is constituted by one or a plurality of processing teeth 80. The processing tooth 80 is a continuous independent tooth (blade) and may be referred to as one tooth (blade). Because the grinding tool 8 of the present embodiment is a multi-thread grinding tool, the processing tooth portion 8B is constituted by a plurality of processing teeth 80.

Each processing tooth 80 spirally extends from one end to the other end in the tool axis direction such that the tooth trace direction is not parallel to the tool axis direction. That is, the tooth trace direction of the processing tooth 80 inclines relative to the tool axis direction. An angle formed by the tool axis direction and the tooth trace direction of the processing tooth 80, i.e., the lead angle, is greater than 0 degrees and less than 90 degrees. The lead angle of the processing tooth 80 in the present embodiment is not less than 45 degrees and less than 90 degrees. The spiral processing tooth 80 may be referred to as a helical processing tooth 80 and is a concept including a processing tooth that does not extend over the entire circumference of the base portion 8A, like the helical gear. Accordingly, each processing tooth 80 may be formed so as not to extend over the entire circumference of the base portion 8A, like the tooth of the helical gear. The processing tooth 80 of the present embodiment is formed so as to make one or more turns around the base portion 8A.

As illustrated in Fig. 3, in a cross section of the grinding tool 8 cut along a plane including the center axis of the grinding tool 8 (hereinafter referred to as "axial direction cross section"), the processing tooth portion 8B is formed such that a plurality of protrusions (processing teeth 80) are arranged on the outer circumferential surface of the base portion 8A along the center axis (in the tool axis direction). In the grinding tool 8, the protrusion and the tooth bottom (the outer circumferential surface of the base portion 8A) are repeatedly arranged in the tool axis direction in the axial direction cross section. Because the grinding tool 8 is the multi-thread grinding tool, adjacent protrusions are mutually different processing teeth 80. If the grinding tool 8 is a five-thread grinding tool, five processing teeth 80 are formed on the base portion 8A. The processing teeth 80 of the present embodiment is formed such that a plurality of protrusions (e.g., three protrusions) are seen in the axial direction cross section. The protrusion used in a corner portion grinding control that will be explained is a protrusion that is located the nearest to one end of the processing tooth 80 in the tool axis direction.

The drive device 6 causes the second spindle 4 to rotate about the second axis A2 and causes at least one of the first holding table 3 and the second holding table 5 to move. The drive device 6 includes a plurality of drive sources and encoders. For instance, the drive device 6 includes a first electric motor 61 for applying the rotation force to the first spindle 2, a second electric motor 62 for applying the rotation force to the second spindle 4, and a third electric motor 63 for changing the position and the angle of the second spindle 4. The first electric motor 61 rotates the first spindle 2 about the first axis A1. The second electric motor 62 rotates the second spindle 4 about the second axis A2. Because Fig. 1 is a conceptual view, the positions of the electric motors 61-63 may differ from actual positions. The drive source may be other than the electric motor.

When grinding is performed, the drive device 6 synchronizes, based on the control of the control device 7, rotation of the first spindle 2 and rotation of the second spindle 4 such that the gear workpiece 9 and the grinding tool 8 are rotated in mesh with each other. Based on the control of the control device 7, the drive device 6 can change the angle of the second spindle 4. In the present embodiment, the drive device 6 moves the second spindle 4 when the relative position of the grinding tool 8 to the gear workpiece 9 is adjusted. The first holding table 3 in the present embodiment is fixed to the bed 10.

The gear manufacturing apparatus 1 of the present embodiment is configured to grind the gear workpiece 9 by meshing and rotating the gear workpiece 9 having teeth formed on its outer circumferential surface and the threaded grinding tool 8 in which the spirally extending processing teeth 80 are formed on the outer circumferential surface of the base portion 8A. The gear manufacturing apparatus 1 may be referred to as a gear grinding device.

The control device 7 is an electronic control unit (ECU) or a computer including one or more processors 71 and a storage 72. The storage 72 is a memory, for instance. The control device 7 is communicably connected to the drive device 6. The control device 7 may be disposed integrally with the bed 10 or may be separate from the bed 10.

The control device 7 controls the drive device 6 to control and adjust the relative position and the relative angle of the grinding tool 8 with respect to the gear workpiece 9. In other words, the control device 7 controls the relative position and the relative angle of the second spindle 4 with respect to the first spindle 2. The control device 7 controls (e.g., performs numerical control for controlling) the position and the angle of the grinding tool 8( the second spindle 4) based on a grinding program pre-stored in the storage 72 and/or a user's operation. That is, the drive device 6 and the control device 7 include an NC system. The control device 7 controls the first electric motor 61 and the second electric motor 62 to control the rotational speeds of the first spindle 2 and the second spindle 4.

Coordinate axes (X-axis, Y-axis, and Z-axis) are defined as follows. The axis parallel to the first axis A1 is the Y axis. The axis orthogonal to the Y axis and parallel to the horizontal component of the second axis A2 is the Z axis. The axis orthogonal to the Y axis and the Z axis is the X axis. The X axis and the Z axis are parallel to the horizontal plane. The gear manufacturing apparatus 1 is disposed such that the Y-axis direction corresponds to the vertical direction (the up-down direction), the X-axis direction corresponds to the front-rear direction (or the right-left direction), and the Z-axis direction corresponds to the right-left direction (or the front-rear direction). The X-axis direction may be referred to as a direction in which the gear workpiece 9 and the grinding tool 8 move toward and away from each other.

In the following description, the radial direction of the gear workpiece 9 is referred to as "workpiece radial direction", as illustrated in Fig. 4. In a case where the gear workpiece 9 is a workpiece in the form of a spur gear, the tooth trace direction is parallel to the axial direction of the gear workpiece 9. In a case where the gear workpiece 9 is a workpiece in the form of a helical gear as in the present embodiment, the tooth trace direction inclines with respect to the axial direction (the first axis A1) of the gear workpiece 9. The tooth trace direction may be referred to as a direction of extension of the tooth 90 that continuously extends from one end of the gear workpiece 9 in the axial direction to the other end in the axial direction. The teeth 90 of the gear workpiece 9 protrude from the cylindrical base portion of the gear workpiece 9 in the workpiece radial direction while being spaced apart from each other. The radial direction of the grinding tool 8 will be referred to as "tool radial direction". The tooth trace direction of the processing tooth 80 may be also referred to as a direction of extension of the processing tooth 80 that continuously extends from one end of the grinding tool 8 in the axial direction to the other end in the axial direction.

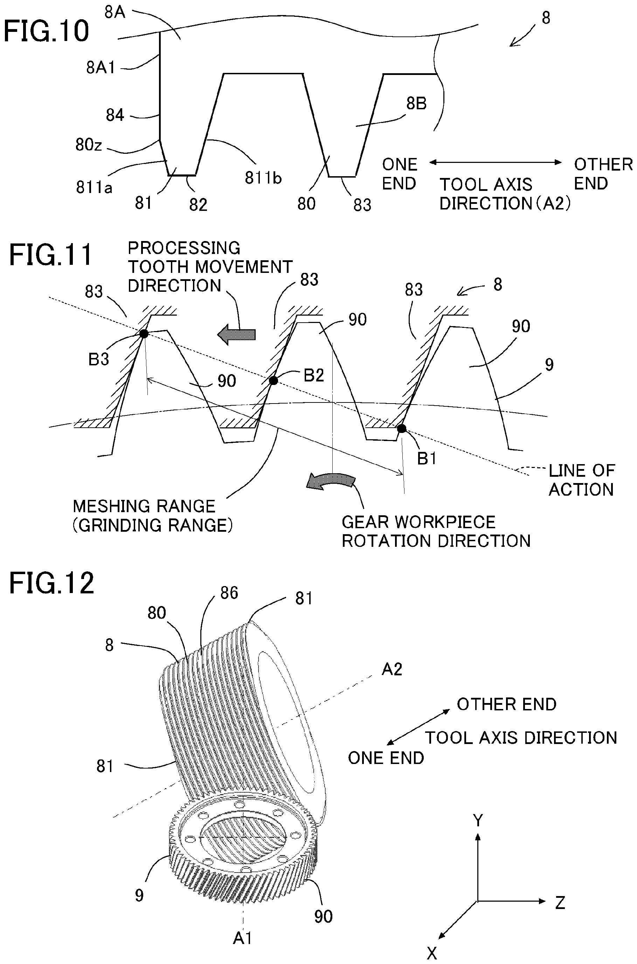

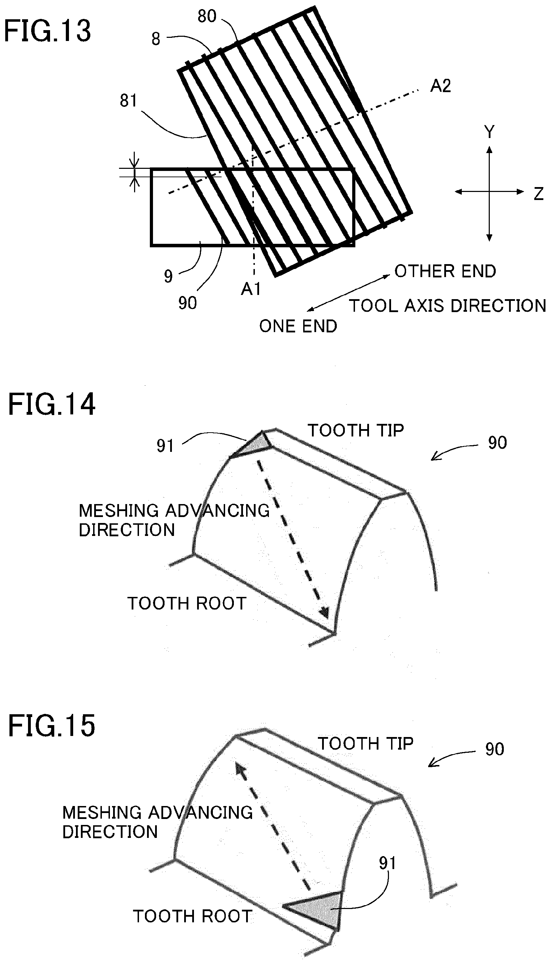

When the gear workpiece 9 that is the workpiece in the form of the helical gear is ground with the grinding tool 8 that is the threaded grinding tool, the second spindle 4 and the second holding table 5 are kept in a state in which the second axis A2 is inclined with respect to the Z axis (Fig. 12 or Fig. 13). In the state in which the second spindle 4 is kept inclined, a tooth surface grinding control and a corner portion grinding control that will be later explained are executed. In grinding according to the present embodiment, the extension direction of the first axis A1 and the extension direction of the second axis A2 are not orthogonal to each other. In a state in which the gear workpiece 9 is held by the first spindle 2, the rotation axis of the gear workpiece 9 (the first axis A1) extends in the Y-axis direction, and each tooth 90 of the gear workpiece 9 extends in a direction (the tooth trace direction) inclined with respect to the Y axis. Before grinding, the grinding tool 8 and the gear workpiece 9 are spaced apart from each other in the X-axis direction.

The control device 7 is configured to execute the tooth surface grinding control and the corner portion grinding control at different timings. The control device 7 of the present embodiment executes the corner portion grinding control after the tooth surface grinding control is executed. In the tooth surface grinding control, each tooth 90 of the gear workpiece 9 is formed into a predetermined shape (target shape) over the entire circumference of the gear workpiece 9 by meshing and rotating the grinding tool 8 and the gear workpiece 9.

The storage 72 stores, for instance, target shape data in the tooth surface grinding control and the target relief shape in the corner portion grinding control. In other words, the storage 72 stores: control (numerical control) data of the position and the locus of the grinding tool 8 for enabling each tooth 90 of the gear workpiece 9 to have the target shape and; control (numerical control) data of the position and the locus of the grinding tool 8 for enabling the gear workpiece 9, which has been formed into the target shape, to have the target relief shape. For instance, the control device 7 executes the tooth surface grinding control based on the numerical control data for the target shape and executes the corner portion grinding control based on the numerical control data for the target relief shape.

### Tooth Surface Grinding Control

The control device 7 initially executes the tooth surface grinding control for the gear workpiece 9. In the tooth surface grinding control, the tooth surfaces of the gear workpiece 9 are ground by the processing teeth 80 by meshing and rotating the grinding tool 8 and the gear workpiece 9. The control device 7 causes the tooth surfaces of the processing teeth 80 of the grinding tool 8 to come into contact with the tooth surfaces of the teeth 90 of the gear workpiece 9 (hereinafter referred to as "workpiece teeth") while synchronizing rotation of the gear workpiece 9 and rotation of the grinding tool 8. Based on the target shape (e.g., numerical control program) stored in the storage 72, the control device 7 moves the grinding tool 8 in the X-Axis direction and the Y-axis direction such that the grinding tool 8 is moved close to the gear workpiece 9. In a case where the target shape is set to form a crowning on the workpiece tooth 90, the control device 7 moves the grinding tool 8 such that the central portion of the workpiece tooth 90 in the tooth trace direction expands. In this case, the control device 7 moves the grinding tool 8 such that a movement locus of the grinding tool 8 is an arc on the XY plane (i.e., the plane orthogonal to the Z axis). That is, the second spindle 4 is closer to the first spindle 2 in grinding the axial end portion of the gear workpiece 9 than in grinding the axially central portion of the gear workpiece 9. This tooth surface grinding control corresponds to finishing.

### Corner Portion Grinding Control

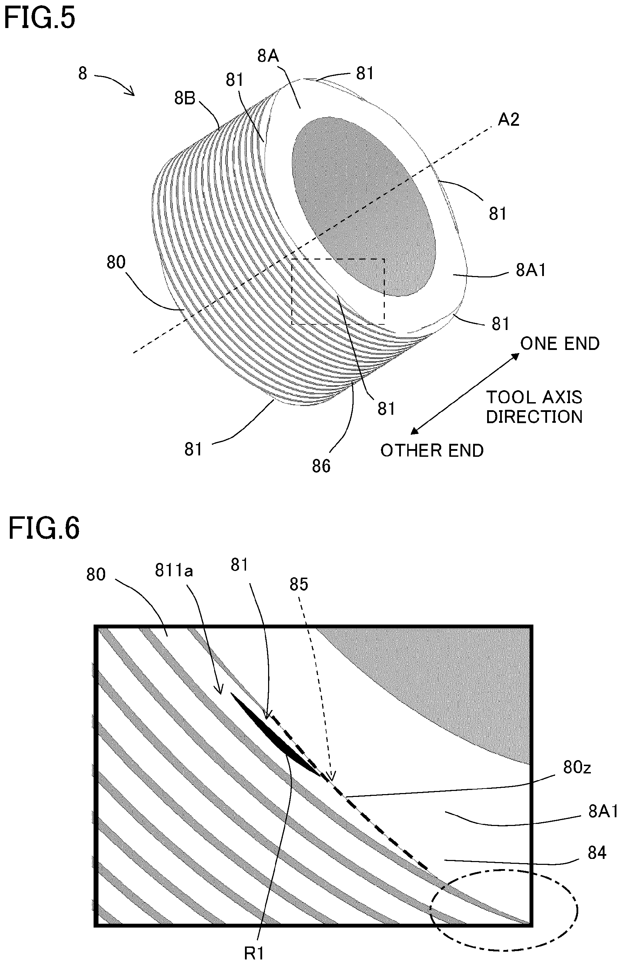

When the tooth surface grinding control is completed, the control device 7 subsequently executes the corner portion grinding control. As illustrated in Figs. 5 and 6, in the corner portion grinding control, one corner portion among four corners of each tooth surface of the gear workpiece 9 is ground such that a termination 80z, which is an edge of the processing tooth 80 in the tooth trace direction, comes into contact with the tooth surface of the gear workpiece 9, utilizing only a termination tooth surface R1 or R2 in one-side tooth surface 811a or the other-side tooth surface 811b of the processing tooth 80, the termination tooth surface R1 or R2 being set to include part of the termination 80z and being one closed region. The termination 80z is an edge of the tooth surface of the processing tooth 80 at one end in the tooth trace direction. The termination 80z may be referred to as an edge of the tooth surface adjacent to a produced end face 84 that will be described.

In the corner portion grinding control, only a termination portion 81 of the processing tooth 80 including the termination 80z where the processing tooth 80 discontinues is used for grinding the one corner portion among the four corners. That is, in the corner portion grinding control, the one-side tooth surface 811a in the tool axis direction or the other-side tooth surface 811b in the tool axis direction at the termination portion 81 is brought into contact with the teeth of the gear workpiece 9, and the gear workpiece 9 and the grinding tool 8 are rotated in mesh with each other, so that the one corner portion (the relief target portion) among the four corners of the tooth surface of the gear workpiece 9 is ground.

The storage 72 stores information on the position and the angle of the grinding tool 8 for grinding the relief target portion into the target relief shape in the corner portion grinding control. The relief target portion is set at a portion of the tooth surface of a completed gear, which is the gear workpiece 9 after grinding, at which the completed gear contacts a mating gear when meshing of the completed gear and the mating gear starts.

The termination portion 81 of the processing tooth 80 is a certain region in the processing tooth 80 including the termination 80z (one end) of the processing tooth 80 formed when the tool is cut in the manufacture of the tool, for instance. The termination 80z is an edge of the processing tooth 80 formed when the processing tooth 80 is cut. Specifically, the termination 80z is an edge portion where the processing tooth 80 discontinues and includes a boundary line 85 (indicated by the dashed line in Fig. 6) between the tooth surface 811a of the processing tooth 80 and the produced end face 84 of the processing tooth 80. The produced end face 84 is an end face of the processing tooth 80 in the tool axis direction formed when the tool is manufactured. In most cases, the end face is a plane orthogonal to the tool axis direction. For instance, a cylindrical or columnar material is processed (e.g., cut), and spiral grooves are formed over the entire material, so that the base portion 8A and the processing tooth portion 8B are produced. The produced end face 84 corresponds to an end face of the material in the axial direction. Because the produced end face 84 seems as if the processing tooth 80 is cut somewhere at its intermediate portion, the produced end face 84 may be referred to as a cut face. The produced end face 84 may be formed by cutting the processing tooth 80.

In the present embodiment, one end face 8A1 of the base portion 8A in the tool axis direction (hereinafter referred to as "one end face 8A1") and the produced end face 84 form one plane and are flush with each other. The produced end face 84 and the one end face 8A1 are a plane orthogonal to the tool axis direction. The processing tooth 80 is produced so as to be cut together with the base portion 8A at the one end and the other end of the grinding tool 8 in the tool axis direction. Thus, the produced end faces 84 are formed at the opposite ends of the processing tooth 80 in the tool axis direction. Due to the produced end face 84, the processing tooth 80 has a portion where the length in the tool radial direction is small, i.e., a portion whose shape is incomplete.

Because the grinding tool 8 is the five-thread grinding tool, the termination 80z is formed in each of the five processing teeth 80. That is, the grinding tool 8 includes five terminations 80z at the one end in the tool axis direction and five terminations 80z at the other end in the tool axis direction. Thus, the two terminations 80z (one end and the other end) are formed for each processing tooth 80. The termination 80z may be referred to as a cut end.

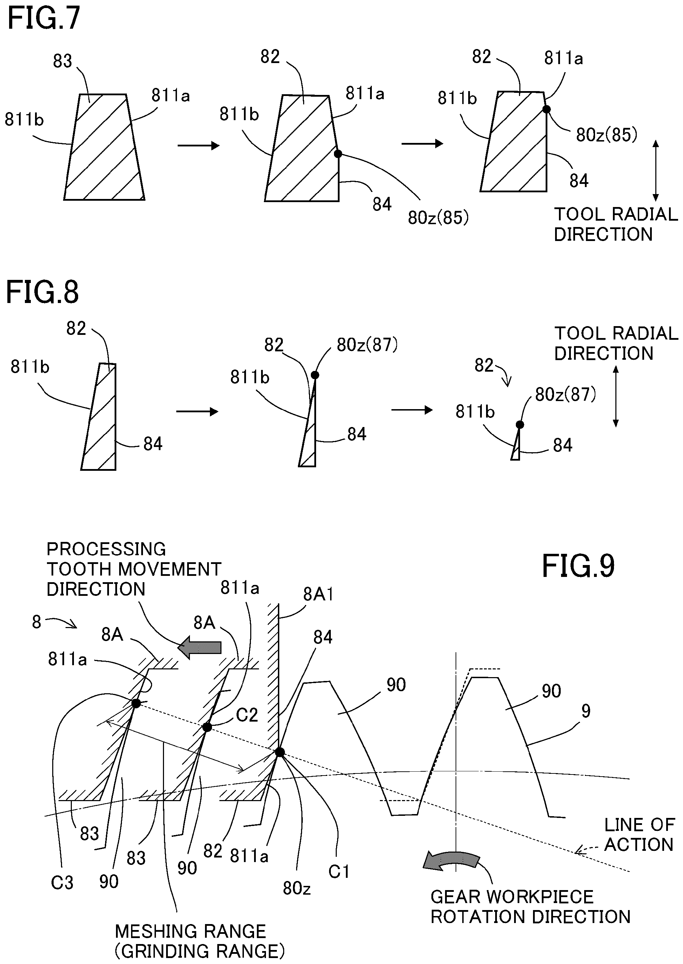

Hereinafter, a cross section obtained by cutting the processing tooth 80 along a plane orthogonal to the tooth trace direction of the processing tooth 80 will be referred to as "tooth trace orthogonal cross section". As illustrated in Fig. 7, the termination portion 81 including the termination 80z includes a portion in which the shape of the processing tooth 80 in the tooth trace orthogonal cross section is not a complete shape (mountain-like shape), namely, an incomplete shape portion 82. That is, the processing tooth 80 includes, in the tooth trace orthogonal cross section, the partially cut incomplete shape portion 82 and a complete shape portion 83 that is not cut and has a complete mountain-like shape (i.e., assumed shape in design). In Fig. 7, the tooth trace orthogonal cross section of the processing tooth 80 at a plurality of positions in the tooth trace direction is illustrated so as to be closer to the one end face 8A1 toward the right side in Fig. 7. Each black dot in Fig. 7 corresponds to the position of the termination 80z (the boundary line 85).

Fig. 8 is a conceptual view of the tooth trace orthogonal cross section of the processing tooth 80 at a portion enclosed by the long dashed short dashed line in Fig. 6. As in Fig. 7, the tooth trace orthogonal cross section of the processing tooth 80 at a plurality of positions is illustrated so as to be closer to the one end face 8A1 toward the right side in Fig. 8. As illustrated in Fig. 8, the incomplete shape portion 82 is formed on the right side of the boundary line 85 in Fig. 6, and the termination 80z of the processing tooth 80 continues. As illustrated in Figs. 7 and 8, the produced end face 84 is formed at the processing tooth 80 corresponding to the termination 80z, and the tooth trace orthogonal cross section of the processing tooth 80 corresponding to the termination 80z is the incomplete shape portion 82.

As illustrated in Fig. 9, in the corner portion grinding control, one corner portion of the tooth surface of the workpiece tooth 90 is ground by only the termination portion 81 of the processing tooth 80. In the example of Fig. 9, a portion that is an outward end portion in the workpiece radial direction (end portion on a tooth tip side) and that is one end portion in the tooth trace direction is ground among the four corners of the tooth surface of the workpiece tooth 90. A line of action is a straight line connecting positions (indicated by black dots) where the tooth surface of the workpiece tooth 90 and the tooth surface 811a of the processing tooth 80 contact, namely, positions where the tooth surface of the workpiece tooth is ground.

A position C1 on the line of action indicates a position where the tooth surface of the workpiece tooth 90 and the tooth surface 811a of the processing tooth 80 start to mesh with each other. At the position C1, the termination 80z (the incomplete shape portion 82) of the processing tooth 80 and the tooth surface of the workpiece tooth 90 contact each other. At a position C2, which is more outward in the workpiece radial direction than the position C1, the tooth surface 811a of the complete shape portion 83 of the termination portion 81 and the tooth surface of the workpiece tooth 90 contact each other. At a position C3, which is a tooth tip of the tooth surface of the workpiece tooth 90, the tooth surface 811a of the complete shape portion 83 of the termination portion 81 and the tooth surface of the workpiece tooth 90 contact each other. In the corner portion grinding control, a meshing range in the movement from the position C1 to the position C3 is a grinding range, and only the corner portion on the tooth tip side of the tooth surface of the workpiece tooth 90 is ground.

As illustrated in Fig. 10, the tooth surface 811a of the processing tooth 80 discontinues at the termination 80z in the axial cross section of the grinding tool 8. In the corner portion grinding control, the tooth surface 811a located at the termination 80z and has an incomplete shape is used in grinding.

In the corner portion grinding control, as illustrated in Fig. 6, the termination tooth surface R1 of the tooth surface 811a, which is a closed region including part (one or more points) of the termination 80z, is used. The closed region is a surface region enclosed by a boundary line (e.g., a closed curve) and may be referred to as a closed surface. The termination tooth surface R1 is in contact with the termination 80z. The position and the size of the termination tooth surface R1 is set depending on the shape, size, position, etc., of a target relief portion 91.

By using, in grinding, the termination tooth surface R1 that is the tooth surface 811a of the termination portion 81, the position C1 at the start of meshing can be moved to the tooth tip side of the tooth surface of the workpiece tooth. That is, by using the incomplete shape portion 82 of the processing tooth 80, it is possible to perform numerical control such that the processing tooth 80 and the workpiece tooth do not contact each other at a portion inward of the position C1 in the workpiece radial direction.

In the tooth surface grinding control, on the other hand, the complete shape portion 83 of the processing tooth 80 is used in grinding, as illustrated in Fig. 11. A position B1 at the start of meshing is one end portion of the workpiece tooth on the tooth root side, and a position B3 at the end of meshing is one end portion of the workpiece tooth on the tooth tip side. Thus, the whole tooth surface of the workpiece tooth can be ground in the tooth surface grinding control, as indicated by a line of action connecting the positions B1, B2, B3 in Fig. 11.

A positional relationship between the gear workpiece 9 and the grinding tool 8 in the tooth surface grinding control is set as illustrated in Fig. 12, for instance. In the tooth surface grinding control, grinding is performed by mainly using a main portion of the grinding tool 8, e.g., a portion except the terminations 80z of the processing teeth 80, namely, a central portion 86 of the tool axis direction. Though grinding is performed by using the central portion 86 of the grinding tool 8 in the tooth surface grinding control, grinding may be performed by using the entirety of the grinding tool 8 (i.e., the central portion 86 and the terminations 80z). The tooth trace orthogonal cross section at the central portion 86 is the complete shape portion 83 without the produced end face 84.

In the tooth surface grinding control described above, by using at least the central portion 86, which includes portions of the processing teeth 80 except the terminations 80z, the tooth surfaces of the central portion 86 are brought into contact with the teeth of the gear workpiece 9, and the gear workpiece 9 and the grinding tool 8 are rotated in mesh with each other, so that the tooth surfaces of the workpiece teeth are ground.

In the corner portion grinding control, on the other hand, a clearance (non-contact portion) is formed between the tooth surface of the workpiece tooth 90 and the processing tooth 80 owing to the incomplete shape portion 82 (the produced end face 84) of each termination 80z. Accordingly, the workpiece tooth 90 and the processing tooth 80 does not contact at the clearance portion, and the tooth surface of the workpiece tooth 90 is not ground. The position and the angle of the grinding tool 8 are adjusted utilizing the clearance, such that the termination 80z of the processing tooth 80 is the positon at the start of meshing. This enables the positon at the start of meshing to be set to the end portion of the workpiece tooth 90 on the tooth tip side. The setting of the position at the start of meshing and the setting of the termination tooth surface R1 in the corner portion grinding control may be performed by adjusting the positon and the angle of the second spindle 4, for instance.

Thus, the corner portion grinding control in which the corner portion on the tooth tip side of the workpiece tooth 90 is ground may be referred to as a control in which meshing of the processing tooth 80 and the tooth of the gear workpiece 9 starts by contacting the termination 80z of the processing tooth 80 and the corner portion of the tooth surface of the workpiece tooth 90 on the tooth tip side.

In the present embodiment, the termination 80z of the processing teeth 80 is formed at each end of the grinding tool 8 in the tool axis direction. Accordingly, in the corner portion grinding control, the position of the grinding tool 8 is controlled such that the only one end portion of the grinding tool 8 in the tool axis direction comes into contact with the gear workpiece 9, as illustrated in Fig. 13. Fig. 13 illustrates a state of the apparatus (conceptual view) when the corner portion of the tooth surface of the workpiece tooth on the tooth tip side is ground in the corner portion grinding control. The second holding table 5 is disposed on the other end side of the grinding tool 8 in the tool axis direction and holds the grinding tool 8 on the other end side in the tool axis direction. A direction from the other end to the one end in the tool axis direction corresponds to a direction from a base to a tip of the second spindle 4. Further, the termination portion 81 is set, for instance, in a region of one circumference of each processing tooth 80 extending so as to make a plurality of turns around the base portion 8A, which one circumference is the nearest to the one end of the grinding tool 8 in the tool axis direction.

The grinding tool 8 used in the corner portion grinding control is the same as the grinding tool 8 used in the tooth surface grinding control. That is, the grinding tool 8 is not changed between the tooth surface grinding control and the corner portion grinding control. The control device 7 is configured to perform the tooth surface grinding control before starting or after completing the corner portion grinding control, without changing the grinding tool 8. The tooth surface of the gear workpiece 9 is ground over the entire circumference by the tooth surface grinding control and the corner portion grinding control.

### Relief Target Portion

The relief target portion (i.e. a portion to be ground) in the corner portion grinding control is set at one corner portion among the four corners of the one-side tooth surface of the workpiece tooth 90 or one corner portion among the four corners of the other-side tooth surface of the workpiece tooth 90, for instance. In a case where the gear workpiece 9 is a workpiece in the form of a driven gear, the meshing position of the workpiece tooth 90 and the grinding tool 8 advances, in accordance with the rotation of them, from an end portion of the tooth surface of the workpiece tooth 90 which is outward in the workpiece radial direction and which is located on the one side in the tooth trace direction to an end portion which is inward in the workpiece radial direction and which is located on the other side in the tooth trace direction, as illustrated in Fig. 14. In other words, the meshing advancing direction in this case is a direction from an end portion which is located on the tooth tip side of the tooth surface of the workpiece tooth 90 and which is located on the one side in the tooth trace direction to an end portion which is located on the tooth root side of the tooth surface of the workpiece tooth 90 and which is located on the other side in the tooth trace direction. The meshing locus in Fig. 14 may be a line connecting: the end portion which is on the tooth tip side of the tooth surface of the workpiece tooth 90 and which is located on the one side in the tooth trace direction; and the end portion which is located on the tooth root side and which is located on the other side in the tooth trace direction. The "meshing locus" is an imaginary line extending along the meshing advancing direction of the two teeth, and is an imaginary line connecting the corner portion on the tooth tip side and the corner portion on the tooth root side so as to divide the tooth surface into two regions. The meshing locus may be referred to as a locus of a portion where the two teeth contact. The outward end portion in the workpiece radial direction may be referred to as a tooth tip end portion in the tooth profile direction, and the inward end portion in the workpiece radial direction may be referred to as a tooth root end portion in the tooth profile direction.

In the example of Fig. 14, the corner portion of the tooth surface of the workpiece tooth to be ground in the corner portion grinding control is set to the end portion (meshing start portion) in the tooth surface of the workpiece tooth 90 which is outward in the workpiece radial direction and which is located on the one side in the tooth trace direction. When the corner portion grinding control using the termination tooth surface R1 is performed in this setting, only the meshing start position (the corner portion on the tooth tip side) of the tooth surface of the workpiece tooth 90 is ground, and the relief portion 91 is formed at the corner portion. Owing to the relief portion 91, the tooth thickness at the meshing start position is reduced.

In a case where the gear workpiece 9 is a workpiece in the form of a drive gear, the meshing position of the tooth surface of the workpiece tooth 90 and the grinding tool 8 advances, in accordance with the rotation of them, from an end portion of the tooth surface of the workpiece tooth 90 which is inward in the workpiece radial direction and which is located on the other side in the tooth trace direction to an end portion which is outward in the workpiece radial direction and which is located on the one side in the tooth trace direction, as illustrated in Fig. 15. In other words, the meshing advancing direction in this case is a direction from an end portion which is located on the tooth root side of the tooth surface of the workpiece tooth 90 and which is located on the other side in the tooth trace direction to an end portion which is located on the tooth tip side and which is located on the one side in the tooth trace direction. The meshing locus in Fig. 15 may be a line connecting: the end portion which is on the tooth root side and which is located on the other side in the tooth trace direction; and the end portion which is on the tooth tip side and which is located on the one side in the tooth trace direction.

In the example of Fig. 15, the corner portion of the tooth surface of the workpiece tooth 90 to be ground in the corner portion grinding control is set to the end portion (meshing start portion) in the tooth surface of the workpiece tooth 90 which is inward in the workpiece radial direction and which is located on the other side in the tooth trace direction. When the corner portion grinding control using a termination tooth surface R2 (that will be described) is performed in this setting, only the meshing start position (the corner portion on the tooth root side) of the tooth surface of the workpiece tooth 90 is ground, and the relief portion 91 is formed at the corner position. Owing to the relief portion 91, the tooth thickness at the meshing start position is reduced.

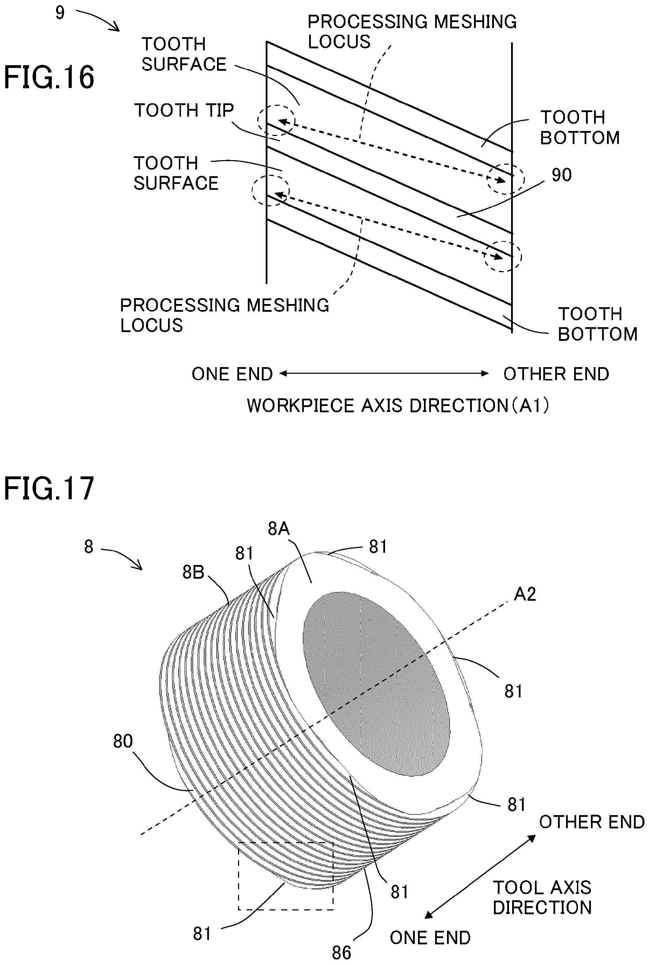

In a case where the meshing start positon of the workpiece tooth 90 in forward rotation and the meshing start position of the workpiece tooth 90 in rearward rotation are the relief target portions, for instance, the relief portion 91 is formed at one corner portion in the one-side tooth surface of the workpiece tooth 90 and one corner portion in the other-side tooth surface of the workpiece tooth 90. Here, the meshing locus assumed when it is assumed that the complete shape portion 83 of the processing tooth 80 and the workpiece tooth 90 mesh each other is referred to as "processing meshing locus". As illustrated in Fig. 16, the relief target portion (i.e., circular portion enclosed by the dashed line) is set at the corner portion corresponding to one end or the other end of the processing meshing locus in the tooth surface of the workpiece tooth 90. In other words, in the tooth surface of the workpiece tooth 90, the relief target portion is set at the corner portion corresponding to the meshing start in the processing meshing locus or the corner portion corresponding to the meshing end in the processing meshing locus. Moreover, in the tooth surface of the workpiece tooth 90, the relief target portion is set at the corner portion on the meshing start side or at the corner portion on the meshing end side in the meshing advancing direction when the workpiece tooth 90 is processed by the processing tooth 80.

In the corner portion grinding control utilizing the termination tooth surface R1, only the meshing start position in the processing meshing locus is ground in the workpiece tooth 90. Accordingly, the relief portion 91 is formed at the corner portion on the tooth tip side, as illustrated in Fig. 14. In the corner portion grinding control utilizing the termination tooth surface R2 that will be described later, only the meshing end portion in the processing meshing locus is ground in the workpiece tooth 90. Accordingly, the relief portion 91 is formed at the corner portion on the tooth root side, as illustrated in Fig. 15. The processing meshing locus may be referred to as a meshing locus when the processing teeth 80 located at the central portion 86 and the workpiece teeth 90 mesh each other.

### Corner Portion Grinding Control for Corner Portion on Tooth Root Side of Workpiece Tooth

As illustrated in Fig. 17, when the corner portion on the tooth root side of the tooth surface of the workpiece tooth 90 is ground by the corner portion grinding control, the other-side tooth surface 811b of the termination portion 81 of the processing tooth 80 (on the other side in the tool axis direction) is used. As illustrated in Figs. 17 and 5, in the corner portion grinding control for the corner portion on the tooth root side, the other-side tooth surface 811b in the tool axis direction (that may be referred to as the tooth surface on the backside of the tooth surface 811a) is used, the other-side tooth surface 811b being located at the termination portion 81 on the one side in the tool axis direction used in the corner portion grinding control for the corner portion on the tooth tip side. That is, in both the corner portion grinding controls, the end of the grinding tool 8 on the same side (i.e., the one end in the tool axis direction) is used. The corner portion on the tooth tip side of the tooth surface of the workpiece tooth 90 is ground by the one-side tooth surface 811a of the termination portion 81, and the corner portion on the tooth root side of the tooth surface of the workpiece tooth 90 is ground by the other-side tooth surface 811b of the termination portion 81. The corner portion on the tooth root side refers to the corner portion corresponding to the meshing end in the processing meshing locus among the four corners located on the tooth root side of the workpiece tooth 90. The corner portion on the tooth tip side refers to the corner portion corresponding to the meshing start in the processing meshing locus among the four corners located on the tooth tip side of the workpiece tooth 90.

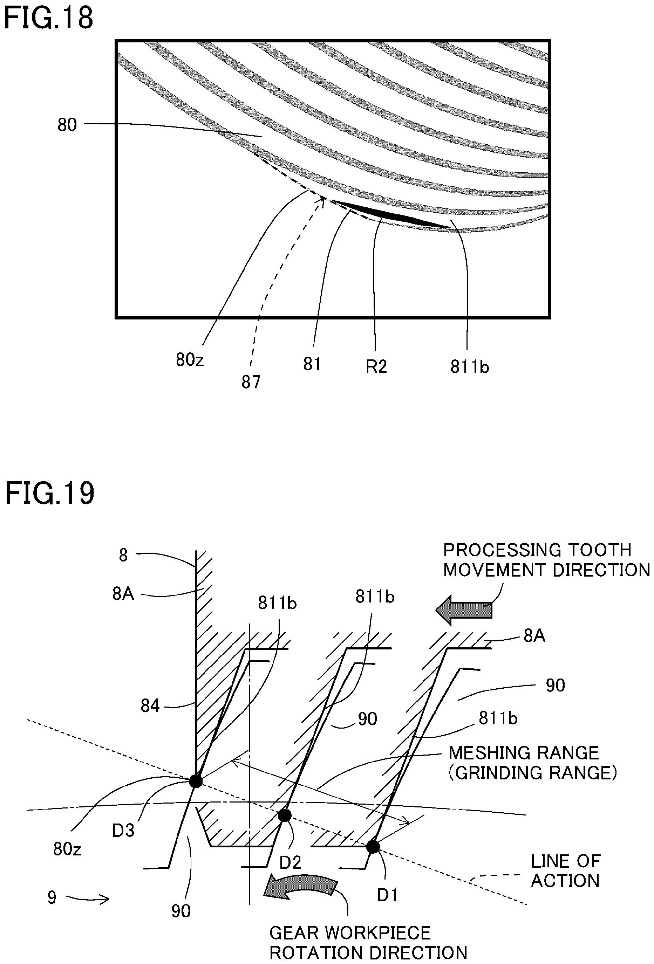

As illustrated in Fig. 18, a termination 80z is a portion corresponding to an edge line 87 of the processing tooth 80. Thus, the termination 80z of the processing tooth 80 includes a portion corresponding to the boundary line 85 in Fig. 6 and a portion corresponding to the edge line 87 in Fig. 18. As illustrated in Figs. 8, 19, and 20, at the termination 80z corresponding to the edge line 87, the length of the processing tooth 80 in the tool radial direction (i.e., in the direction of protrusion) is smaller than that of the complete shape portion 83. When the corner portion on the tooth root side is ground in the corner portion grinding control, the tooth surface 811b of the termination portion 81, which includes the portion where the length of the processing tooth 80 in the tool radial direction is small, is used.

As illustrated in Fig. 19, the use of the termination 80z corresponding to the edge line 87 in grinding allows the contact of the processing tooth 80 and the workpiece tooth 90, which has started from the tooth root, to end before reaching the tooth tip (i.e., intermediate between the tooth root and the tooth tip), as compared with the tooth surface grinding control. As in the tooth surface grinding control, the meshing of the processing tooth 80 and the workpiece tooth 90 starts at a position D1 on the tooth root side of the workpiece tooth 90, and the meshing ends at a position D3 via a position D2 while the meshing position moves toward the tooth tip side. Thus, because the processing tooth 80 discontinues at the termination 80z, the range of contact of the processing tooth 80 and the workpiece tooth 90 (i.e., the grinding range) is smaller than that in the tooth surface grinding control, and only the corner portion on the tooth root side of the workpiece tooth 90 is ground. At the position D3, part of the termination 80z on the edge line 87 and the tooth surface of the workpiece tooth 90 are in contact with each other.

In the corner portion grinding control, as illustrated in Fig. 18, the termination tooth surface R2 of the tooth surface 811b is used. The termination tooth surface R2 is a closed region including part of the termination 80z. The termination tooth surface R2 is in contact with the edge line 87 (the termination 80z). The corner portion grinding control using the termination tooth surface R2 may be referred to as a control in which the meshing of the processing tooth 80 and the workpiece tooth 90 ends by contact of the part of the termination 80z of the processing tooth 80 and the corner portion on the tooth root side of the tooth surface of the workpiece tooth 90.

Owing to the corner portion grinding control, as illustrated in Fig. 15, the relief portion 91 is formed at the corner portion on the tooth root side of the workpiece tooth. Like the termination tooth surface R1, the position and the size of the termination tooth surface R2 is set depending on the shape, the size, the position, etc., of the target relief portion 91. The termination tooth surfaces R1, R2 are adjusted by the position and the angle of the grinding tool 8 (the second spindle 4). By executing the corner portion grinding control, the relief portion 91 is formed all the workpiece teeth 90 of the gear workpiece 9. In other words, the relief target portion of each workpiece tooth 90 is ground by the corner portion grinding control.

### Gear Manufacturing Method

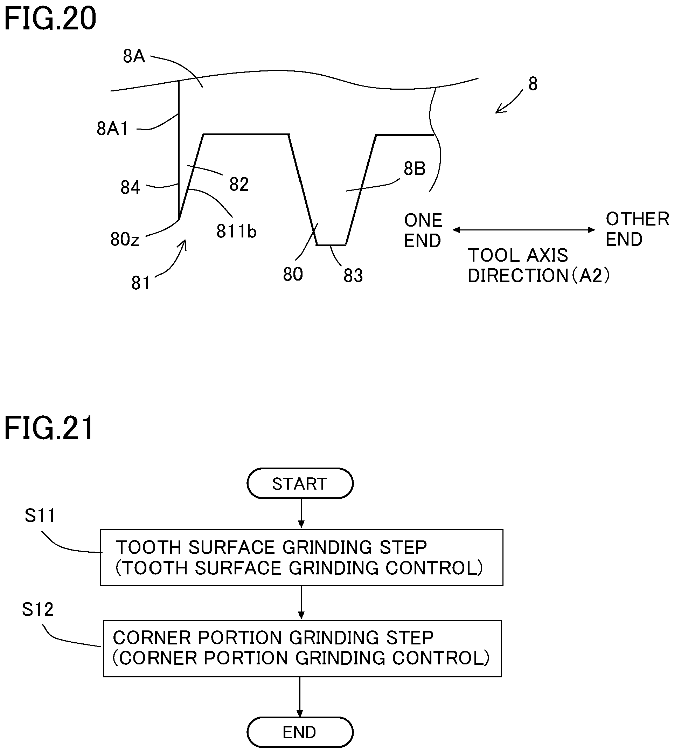

As illustrated in Fig. 21, the gear manufacturing method according to the embodiment is a gear manufacturing method using the gear manufacturing apparatus 1 and includes a corner portion grinding step S12. In the corner portion grinding step S12, the gear manufacturing apparatus 1 grinds one corner portion among the four corners of each tooth surface of the gear workpiece 9 such that the termination 80z, which is an edge of the processing tooth 80 in the tooth trace direction, comes into contact with the gear workpiece 9, utilizing only the termination tooth surface R1 or R2 in the one-side tooth surface 811a or the other-side tooth surface 811b of the processing tooth 80. The termination tooth surface R1, R2 is set to include part of the termination 80z and is one closed region. In other words, in the corner portion grinding step S12, the gear manufacturing apparatus 1 grinds the one corner portion among the four corners of the tooth surface of the gear workpiece 9 such that meshing of the processing tooth 80 and the gear workpiece 9 starts or ends by contacting of the termination 80z of the processing tooth 80 and the one corner portion among the four corners of the tooth surface of the gear workpiece 9. The corner portion grinding step S12 corresponds to execution of the corner portion grinding control by the gear manufacturing apparatus 1.

The gear manufacturing method according to the present disclosure further includes a tooth surface grinding step S11. In the tooth surface grinding step S11, the gear manufacturing apparatus 1 grinds the tooth surface of the gear workpiece by the processing tooth 80 by meshing and rotating the grinding tool 8 and the gear workpiece 9. The tooth surface grinding step S11 corresponds to execution of the tooth surface grinding control by the gear manufacturing apparatus 1. Though the tooth surface grinding step S11 is executed before the corner portion grinding step S12 in Fig. 21, the tooth surface grinding step S11 may be executed after the corner portion grinding step S12. The grinding tool 8 need not be changed between the tooth surface grinding step S11 and the corner portion grinding step S12. It is noted, however, that the grinding tool 8 may be changed between Steps S11 and Step S12 (i.e., between the controls). The gear manufacturing method may be referred to as a gear grinding method.

### Advantageous Effects of Present Embodiment

In the gear manufacturing apparatus 1 according to the present embodiment, only the termination tooth surface R1 or R2 including part of the termination 80z of the processing tooth 80 is used in the corner portion grinding control. The termination 80z of the processing tooth 80 is one end of the processing tooth 80 formed by manufacture of the tool. One axial end face of the tool is not orthogonal to the tooth trace direction of the processing tooth 80 in view of manufacture of the tool (e.g., due to the lead angle). That is, the produced end face 84 including the termination 80z of the processing tooth 80 is not orthogonal to the tooth trace direction, and the shape of the processing tooth 80 at the termination 80z is incomplete. By using the incomplete shape portion (82) of the processing tooth, only the relief target portion can be ground without bringing the tooth surface of the processing tooth 80 into contact with any portion of the tooth surface of the workpiece tooth 90 other than the relief target portion (i.e., one of the four corners). The relief target portion is ground, so that the tooth thickness at the portion in question is reduced, thus preventing breakage of the tooth at the start of meshing.

The use of the termination tooth surface R1 or R2 of the processing tooth 80 eliminates a special tool for grinding the four corners of the tooth surface of the workpiece tooth 90, and the tool that is used to grind other portions can be used in common for grinding the four corners. That is, in grinding the four corners of the tooth surface of the workpiece tooth 90, it is not necessary to change the tools, thus resulting in efficient grinding. According to the present embodiment, it is possible to efficiently form, for the workpiece tooth 90, the tooth surface capable of suppressing a damage of the tooth due to the phase shift at the start of meshing (i.e., the tooth surface in which the relief portion 91 is formed at the corner portion). This advantage is offered in the gear manufacturing method of the present embodiment including the corner portion grinding step S12 corresponding to the corner portion grinding control.

According to the corner portion grinding control, the meshing starts or ends at the termination 80z, namely, at the incomplete shape portion (82) of the processing tooth 80. As compared with a case in which the entirety of the tooth surface of the gear workpiece 9 is ground by the processing tooth 80 (83) having a complete shape, the meshing range, namely, the grinding range, is smaller, thus enabling only the corner portion of the workpiece tooth 90 to be ground.

As described above, because the end of the grinding tool 8 is utilized in the corner portion grinding control, a special tool dedicated to form the relief portion 91 is not necessary, and the same tool as the grinding tool 8 used in the tooth surface grinding control can be used. That is, the grinding tool 8 need not be changed between the corner portion grinding control and the tooth surface grinding control, thus allowing the two controls to be successively executed (without a step of changing tools). Further, the relief portion 91 is formed in the tooth surface of the workpiece tooth 90, resulting in reduced gear noise and tooth surface wear. That is, the present embodiment allows enhanced quietness and durability.

In the present embodiment, the corner portion grinding control is executed after the tooth surface grinding control. Thus, the corner portion grinding control is executed for the gear workpiece 9 ground in the target shape (e.g., the shape in which a crowning is formed on the tooth). Accordingly, the amount of grinding in the corner portion grinding control is smaller and the formation accuracy of the relief portion 91 is higher, as compared with a case in which the corner portion grinding control is executed before the tooth surface grinding control. Further, the load on the termination portion 81 (the termination tooth surface R1, R2) is small, thus preventing a deterioration and a breakage occurrence in the termination portion 81.

The control device 7 may be configured to execute the tooth surface grinding control after the corner portion grinding control. Also in this case, a step of changing the tools is not necessary between the corner portion grinding control and the tooth surface grinding control, as in the embodiment illustrated above. In this case, the tooth surface grinding control is executed in a state in which the relief portion 91 is formed in the gear workpiece 9. This enables the tooth surface grinding control to be executed from a state in which the gear workpiece 9 is partly ground It is thus expected that a deterioration of the central portion 86 of the grinding tool 8 (e.g., a reduction of the grinding tool) is prevented.

The storage 72 stores, for instance, the relief target portion and the target relief shape of the gear workpiece 9 in the corner portion grinding control and the target shape of the gear workpiece 9 in the tooth surface grinding control. The storage 72 stores control (numerical control) data of the positon and the locus of the grinding tool 8 for enabling each tooth surface of the gear workpiece 9 to have the target relief shape. Accordingly, when the corner portion grinding control is executed before the tooth surface grinding control, the storage 72 stores control (numerical control) data of the position and the locus of the grinding tool 8 for enabling the tooth of the gear workpiece 9, in which the target relief shape is formed (i.e., the tooth of the gear workpiece 9 in which the relief portion 91 is formed), to have the target shape (such as a crowning shape having the relief portion 91). The control device 7 executes the corner portion grinding control based on the numerical control data for the target relief shape and executes the tooth surface grinding control based on the numerical control data for the target normal shape. This enables an improvement in the life of the grinding tool 8 as a whole, especially, the life of the principal part of the grinding tool 8.

### Others

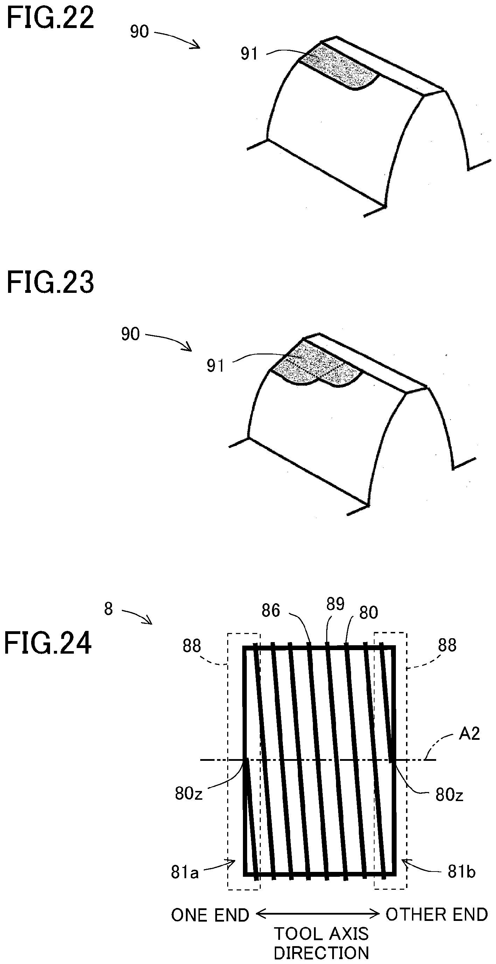

The present invention may be otherwise embodied. For instance, the gear workpiece 9 is not limited to the workpiece in the form of the helical gear but may be a workpiece in the form of a spur gear. The tool attached to the second spindle 4 is not limited to the grinding tool 8 but may be a cutting tool (such as a hob cutter). The tool in the present invention may be a tool for grinding or cutting. The shape of the relief portion 91 may be a shape extending in the tooth trace direction such as a shape obtained by performing traverse processing in the tooth trace direction, as illustrated in Fig. 22, for instance. The shape of the relief portion 91 may be constituted by a portion extending in the tooth trace direction and a portion extending in a direction intersecting the tooth trace direction, as illustrated in Fig. 23, for instance. The size of the relief portion 91 may be suitably set. The shape of the relief portion 91 may be set such that a boundary between the relief portion 91 and the tooth surface, i.e., an edge portion, is round or smooth.

The drive device 6 may be configured to move the first holding table 3. The drive device 6 may be configured to move both the first holding table 3 and the second holding table 5. In the illustrated embodiment, when grinding is performed, the first spindle 2 (the gear workpiece 9) is rotated by the drive force of the drive device 6. Instead of applying the drive force to the first spindle 2 by the drive device 6, the first spindle 2 may be kept in a state in which the first spindle 2 is freely rotatable. In this case, the gear workpiece 9 is rotated not by the drive force of the drive device 6 but by rotation of the grinding tool 8 meshing therewith.

According to the present disclosure, the tooth surface grinding control and the corner portion grinding control can be executed for one gear workpiece 9 by using the same tool and the same apparatus. The two controls may be executed by mutually different tools and by mutually different apparatuses. In view of the efficiency, however, the two controls are desirably executed by one common tool and by one common apparatus. The tooth trace orthogonal cross section of the processing tooth 80 at the termination has an incomplete shape even if the processing tooth 80 is a tooth of the helical gear (such as the processing tooth 80 whose lead angle is less than 45 degrees). Accordingly, the advantages similar to those described above is obtained in the corner portion grinding control.

The positon of the termination 80z is not limited to the one end and the other end of the grinding tool 8. For instance, the processing tooth 80 may be divided at the middle of the grinding tool 8 in the tool axis direction by cutting only the processing tooth 80 without cutting the base portion 8A. In this case, one processing tooth 80 is divided into two processing teeth 80, and the termination 80z of the processing tooth 80 is formed at the central position of the grinding tool 8. One end face 8A1 of the base portion 8A need not coincide with the position of the termination 80z of the processing tooth 80. For instance, the length of the base portion 8A in the tool axis direction may be larger than the length of the processing tooth 80 in the tool axis direction. The grinding tool 8 may be configured such that a component having a length longer than the base portion 8A may be provided in the inner circumferential portion of the base portion 8A. As described above, the position of the termination 80z differs depending on the tool and may be suitably set. In view of the ease of the positon control, the termination 80z is desirably located at the one end of the grinding tool 8 in the tool axis direction or at the one end of the base portion 8A in the tool axis direction. One of the terminations 80z of the processing tooth 80 may be rephrased as a start end. The corner portion may be referred to as a corner.

The grinding tool 8 may be configured such that the strength of the tooth surface of the processing tooth 80 at the one end portion in the tool axis direction including the termination 80z may be higher than the strength of the tooth surface at the central portion in the tool axis direction (the central portion 86) not including the termination 80z. The processing tooth 80 may include, in the tooth trace orthogonal cross section, the incomplete shape portion 82 which is incomplete in shape due to the termination 80z and the complete shape portion 83 not including the termination 80z, and the grinding tool 8 may be configured such that the strength of the incomplete shape portion 82 may be higher than the strength of the complete shape portion 83. The strength may be measured according to the Ogoshi-type grade testing, for instance.

It is estimated that the incomplete shape portion 82 including the termination 80z is more likely to be damaged than the complete shape portion 83. Thus, the incomplete shape portion 82 may be subjected to coating (such as diamond or metal coating) for enhancing the strength. This allows a further enhanced life of the tool. Specifically, as illustrated in Fig. 24, the grinding tool 8 is a threaded tool for gear processing that includes a cylindrical or columnar base portion 8A, one or more processing teeth 80 formed integrally on the outer circumferential surface of the base portion 8A so as to spirally extend around the base portion 8A. The threaded tool is configured to rotate in mesh with the gear workpiece 9 to grind the tooth surface of the gear workpiece 9. A coating layer 88 may be formed at a portion of the processing tooth 80 that includes the termination 80z, which is an edge in the tooth trace direction.

The processing tooth 80 includes a first termination portion 81a including a first termination 80z that is a one-side edge of the processing tooth 80 in the tooth trace direction, a second termination portion 81b including a second termination 80z that is the other-side edge of the processing tooth 80 in the tooth trace direction, and a central portion 86 located between the first termination portion 81a and the second termination portion 81b. The surface of at least one of the first termination portion 81a and the second termination portion 81b is covered with the coating layer 88. The surface of the central portion 86 is not covered with the coating layer 88. It can be said that the strength is partially improved in the thus formed processing tooth 80.

That is, the coating layer 88 may be formed at at least one of the one end and the other end of the processing tooth 80 in the tool axis direction, namely, at the termination portion 81. The coating process may be performed on the tooth surface that is seen from the one side of the grinding tool 8 in the tool axis direction (i.e., the tooth surface seen with the one end face 8A1). For enhancing the life of the tool that executes the corner portion grinding control (step), only the termination portion 81 needs to be reinforced. In view of manufacturing efficiency, the coating layer 88 needs to be formed at only part of the processing tooth 80 including the termination 80z. It can be said that the processing tooth 80 includes a non-coated portion 89. In the thus configured grinding tool 8, the strength of the part of the processing tooth 80 including the termination 80z is enhanced by the coating layer 88. Accordingly, even if the grinding tool 8 is used in the gear manufacturing apparatus that executes the corner portion grinding control, the tool is prevented from being broken, enabling an improvement in the life of the tool. In the non-coated portion 89, on the other hand, the grinding tool (grindstone) is ground and sharpened during processing owing to relatively high self sharpening. Thus, the processing tooth 80 maintains sharpness at the non-coated portion 89 and is suitable for main processing at the non-coated portion 89. In this respect, the threaded grinding tool of normal strength without the coating layer 88 can sufficiently execute the corner portion grinding control, like execution of the tooth surface grinding control.

The processing tooth 80 may be formed such that the material of at least one of the first termination portion 81a and the second termination portion 81b is different from a material of the central portion 86. For instance, a portion indicated by each symbol 88 in Fig. 24 may be a material changed portion formed of a material different from the material of the central portion 86. For instance, cylindrical or columnar members having the same diameter but formed of different materials are coaxially bonded by an adhesive or the like to form one base member. The two materials are alumina and CBN, for instance. On the surface of the base member, spiral groves are formed (e.g., cut) so that the base portion 8A and the processing tooth portion 80B are formed. Thus, there are formed, on the surface of the tool, the processing teeth 80 in each of which the material is different between: the first termination portion 81a including the termination 80z; and the second termination portion 81b and the central portion 86. This configuration enables at least one of the first termination portion 81a and the second termination portion 81b to be formed of the material with higher strength than the central portion 86. Thus, the same advantage described above with respect to the coating layer is obtained. Further, at least one of the first termination portion 81a and the second termination portion 81b may be formed of a material with lower strength than the central portion 86. In a case where the corner portion of the tooth surface of the workpiece tooth 90 is desired to be mainly ground with high accuracy, the termination portion 81 is likely to be sharpened owing to relatively high self sharpening if the termination portion 81 is formed of the material with low strength (soft material). In this case, the grinding accuracy is improved. The configuration in which the coating layer 88 is provided and the configuration in which the tool is formed of two or more kinds of material is applicable to a cutting tool. The manufacturing method of the threaded tool is not limited to the method described above, but known methods are applicable. It can be said that the processing tooth 80 formed of a plurality of different materials or the processing tooth 80 in which the coating layer 88 is formed at a portion thereof includes a relatively high self sharpening portion and a relatively low self sharpening portion.

### Addition

The gear manufacturing apparatus 1 of the present embodiment for grinding the gear workpiece 9 including a plurality of teeth by meshing and rotating the gear workpiece 9 and the tool 8 for grinding or cutting that includes one or more processing teeth 80 on the outer circumferential surface of the tool 8, the apparatus including:
a first spindle 2 configured to hold the gear workpiece 9;
a first holding table 3 rotatably holding the first spindle 2 about a first axis A1 that is an axis of the first spindle 2;
a second spindle 4 configured to hold the tool 8;
a second holding table 5 rotatably holding the second spindle 4 about a second axis A2 that is an axis of the second spindle 4;
a drive device 6 configured to rotate the second spindle 4 about the second axis A2 and move at least one of the first holding table 3 and the second holding table 5; and
a control device 7 configured to control the drive device 6 to adjust a relative position and a relative angle of the tool 8 with respect to the gear workpiece 9.

Here, the radial direction of the gear workpiece 9 is defined as a workpiece radial direction, and the axial direction of the tool 8 is defined as a tool axis direction. The control device 7 is configured to execute, by controlling the drive device 6: a tooth surface grinding control in which the tool 8 and the gear workpiece 9 are meshed and rotated to grind each of the teeth of the gear workpiece 9 in a predetermined shape over the entire circumference of the gear workpiece 9 using the central portion 86 of the tool 8 in the tool axis direction; and a corner portion grinding control in which only the one-side tooth surface 811a or the other-side tooth surface 811b of the processing tooth 80 in the tool axis direction at the portion 81 located the nearest to one end of the processing tooth 80 in the tool axis direction is brought into contact with the gear workpiece 9, and the tool 8 and the gear workpiece 9 are meshed and rotated, so as to grind, over the entire circumference of the gear workpiece 9, at least one of the four corners of the tooth surface of the gear workpiece 9 which is an end portion of the tooth surface in the workpiece radial direction and the tooth trace direction. The tooth surface grinding control and the corner portion grinding control are executed at different timings.

According to this configuration, in the corner portion grinding control, the one end portion (81) of the grinding tool 8 in the tool axis direction is brought into contact with the gear workpiece 9, and other portion of the grinding tool 8 is prevented from contacting the gear workpiece 9, so that only a predetermined portion of the gear workpiece 9 (i.e., the one corner portion among the four corners) can be ground. Because the end of the grinding tool 8 is utilized in the corner portion grinding control, a special tool dedicated to form the relief portion 91 at the one corner portion of the workpiece tooth 90 is not necessary, and the same tool as the grinding tool 8 used in the tooth surface grinding control can be used. That is, the grinding tool 8 need not be changed between the corner portion grinding control and the tooth surface grinding control, thus allowing the two controls to be successively executed (without a step of changing tools).

### Description of Reference Numerals

1...gear manufacturing apparatus, 2...first spindle, 3...first holding table, 4...second spindle, 5...second holding table, 6...drive device , 7...control device 8...grinding tool (tool, threaded tool), 8A...base portion , 8B...processing tooth portion, 80...processing tooth , 80z...termination, 81...termination portion, 811a, 811b...tooth surface, 88...coating layer, 9...gear workpiece, 90...tooth, 91...relief portion, A1...first axis, A2... second axis

## Claims

1. A gear manufacturing apparatus configured to grind a gear workpiece including teeth formed on its outer circumferential surface, by meshing and rotating the gear workpiece and a threaded tool including one or more spiral processing teeth formed on an outer circumferential surface of a base portion of the tool, comprising:
a control device configured to execute a corner portion grinding control in which one corner portion among four corners of each tooth surface of the gear workpiece is ground such that a termination, which is an edge of the processing tooth in a tooth trace direction, comes into contact with the gear workpiece, utilizing only a termination tooth surface in a one-side tooth surface of the processing tooth or the other-side tooth surface of the processing tooth, the termination tooth surface being set to include part of the termination and being one closed region.

2. The gear manufacturing apparatus according to claim 1,
wherein, where an axial direction of the tool is defined as a tool axis direction, the termination is located at a one-side end of the processing tooth in the tool axis direction, and
wherein, in the corner portion grinding control, the control device allows the corner portion of the gear workpiece on a tooth tip side to be ground utilizing only the termination tooth surface set in the one-side tooth surface of the processing tooth in the tool axis direction.

3. The gear manufacturing apparatus according to claim 1,
wherein, where an axial direction of the tool is defined as a tool axis direction, the termination is located at a one-side end of the processing tooth in the tool axis direction, and
wherein, in the corner portion grinding control, the control device allows the corner portion of the gear workpiece on a tooth root side to be ground utilizing only the termination tooth surface set in the other-side tooth surface of the processing tooth in the tool axis direction.

4. A gear manufacturing apparatus configured to grind a gear workpiece including teeth formed on its outer circumferential surface, by meshing and rotating the gear workpiece and a threaded tool including one or more spiral processing teeth formed on an outer circumferential surface of a base portion of the tool, comprising:
a control device configured to control a relative position and a relative angle of the tool with respect to the gear workpiece,
wherein the control device is configured to execute a corner portion grinding control in which meshing of the processing tooth and the tooth of the gear workpiece starts or ends by contact of a termination, which is an edge of the processing tooth in a tooth trace direction, and one corner portion among four corners of a tooth surface of the gear workpiece.

5. The gear manufacturing apparatus according to claim 4, wherein the corner portion grinding control is set such that the meshing of the processing tooth and the tooth of the gear workpiece starts by contact of the termination of the processing tooth and the one corner portion of the tooth surface of the gear workpiece on a tooth tip side.

6. The gear manufacturing apparatus according to claim 4, wherein the corner portion grinding control is set such that the meshing of the processing tooth and the tooth of the gear workpiece ends by contact of the termination of the processing tooth and the one corner portion of the tooth surface of the gear workpiece on a tooth root side.

7. The gear manufacturing apparatus according to any one of claims 1-6, wherein the control device is configured to execute a tooth surface grinding control in which the tooth surface of the gear workpiece is ground by the processing tooth by meshing and rotating the tool and the gear workpiece, before starting or after completing the corner portion grinding control without changing the tool.

8. The gear manufacturing apparatus according to any one of claims 1-7,
wherein the processing tooth includes:
a first termination portion including a first termination that is a one-side edge of the processing tooth in the tooth trace direction;
a second termination portion including a second termination that is the other-side edge of the processing tooth in the tooth trace direction; and
a central portion located between the first termination portion and the second termination portion,
wherein a surface of at least one of the first termination portion and the second termination is covered with a coating layer, and
wherein a surface of the central portion is not covered with the coating layer.

9. The gear manufacturing apparatus according to any one of claims 1-7,
wherein the processing tooth includes:
a first termination portion including a first termination that is a one-side edge of the processing tooth in the tooth trace direction;
a second termination portion including a second termination that is the other-side edge of the processing tooth in the tooth trace direction; and
a central portion located between the first termination portion and the second termination portion, and
wherein a material of at least one of the first termination portion and the second termination portion is different from a material of the central portion.

10. A gear manufacturing method using a gear manufacturing apparatus configured to grind a gear workpiece including teeth formed on its outer circumferential surface, by meshing and rotating the gear workpiece and a threaded tool including one or more spiral processing teeth formed on an outer circumferential surface of a base portion of the tool, the method comprising:
a corner portion grinding step in which the gear manufacturing apparatus grinds one corner portion among four corners of each tooth surface of the gear workpiece such that a termination, which is an edge of the processing tooth in a tooth trace direction, comes into contact with the gear workpiece, utilizing only a termination tooth surface in a one-side tooth surface or the other-side tooth surface of the processing tooth, the termination tooth surface being set to include part of the termination and being one closed region.

11. The gear manufacturing method according to claim 10,
wherein, where an axial direction of the tool is defined as a tool axis direction, the termination is located at one end of the processing tooth in the tool axis direction, and
wherein, in the corner portion grinding step, the corner portion of the gear workpiece on a tooth tip side is ground utilizing only the termination tooth surface set in the one-side tooth surface of the processing tooth in the tool axis direction.

12. The gear manufacturing method according to claim 10,
wherein, where an axial direction of the tool is defined as a tool axis direction, the termination is located at one end of the processing tooth in the tool axis direction, and
wherein, in the corner portion grinding step, the corner portion of the gear workpiece on a tooth root side is ground utilizing only the termination tooth surface set in the other-side tooth surface of the processing tooth in the tool axis direction.

13. A gear manufacturing method using a gear manufacturing apparatus configured to grind a gear workpiece including teeth formed on its outer circumferential surface, by meshing and rotating the gear workpiece and a threaded tool including one or more spiral processing teeth formed on an outer circumferential surface of a base portion of the tool, the method comprising:
a corner portion grinding step in which the gear manufacturing apparatus grinds one corner portion among four corners of a tooth surface of the gear workpiece such that meshing of the processing tooth and the tooth of the gear workpiece starts or ends by contact of a termination, which is an edge of the processing tooth in a tooth trace direction, and the one corner portion.

14. The gear manufacturing method according to claim 13, wherein, in the corner portion grinding step, the meshing of the processing tooth and the gear workpiece starts by contact of the termination of the processing tooth and the one corner portion of the tooth surface of the gear workpiece on a tooth tip side.

15. The gear manufacturing method according to claim 13, wherein, in the corner portion grinding step, the meshing of the processing tooth and the tooth of the gear workpiece ends by contact of the termination of the processing tooth and the one corner portion of the tooth surface of the gear workpiece on a tooth root side.

16. The gear manufacturing method according to any one of claims 10-15, further comprising a tooth surface grinding step in which the gear manufacturing apparatus grinds the tooth surface of the gear workpiece by the processing tooth by meshing and rotating the tool and the gear workpiece,
wherein the tooth surface grinding step is executed before or after the corner portion grinding control without changing the tool.

17. A threaded tool for gear processing, comprising: a cylindrical or columnar base portion; one or more processing teeth formed integrally on an outer circumferential surface of the base portion so as to spirally extend around the base portion, the threaded tool being configured to rotate in mesh with a gear workpiece to process a tooth surface of the gear workpiece,
wherein the processing tooth includes:
a first termination portion including a first termination that is a one-side edge of the processing tooth in a tooth trace direction;
a second termination portion including a second termination that is the other-side edge of the processing tooth in the tooth trace direction; and
a central portion located between the first termination portion and the second termination portion, and
wherein a surface of at least one of the first termination portion and the second termination is covered with a coating layer, and
wherein a surface of the central portion is not covered with the coating layer.

18. A threaded tool for gear processing, comprising: a cylindrical or columnar base portion; one or more processing teeth formed integrally on an outer circumferential surface of the base portion so as to spirally extend around the base portion, the threaded tool being configured to rotate in mesh with a gear workpiece to process a tooth surface of the gear workpiece,
wherein the processing tooth includes:
a first termination portion including a first termination that is a one-side edge of the processing tooth in a tooth trace direction;
a second termination portion including a second termination that is the other-side edge of the processing tooth in the tooth trace direction; and
a central portion located between the first termination portion and the second termination portion, and
wherein a material of at least one of the first termination portion and the second termination portion is different from a material of the central portion.

19. A gear manufacturing apparatus for grinding a gear workpiece including a plurality of teeth by meshing and rotating the gear workpiece and a tool for grinding or cutting that includes one or more spiral processing teeth on an outer circumferential surface of the tool, the apparatus comprising:
a first spindle configured to hold the gear workpiece;
a first holding table rotatably holding the first spindle about a first axis that is an axis of the first spindle;
a second spindle configured to hold the tool;
a second holding table rotatably holding the second spindle about a second axis that is an axis of the second spindle;
a drive device configured to rotate the second spindle about the second axis and move at least one of the first holding table and the second holding table; and
a control device configured to control the drive device to adjust a relative position and a relative angle of the tool with respect to the gear workpiece,
wherein a radial direction of the gear workpiece is defined as a workpiece radial direction, and an axial direction of the tool is defined as a tool axis direction,
wherein the control device is configured to execute, by controlling the drive device,
a tooth surface grinding control in which the tool and the gear workpiece are meshed and rotated to grind each of the teeth of the gear workpiece in a predetermined shape over an entire circumference of the gear workpiece using a central portion of the tool in the tool axis direction; and
a corner portion grinding control in which only a one-side tooth surface or the other-side tooth surface of the processing tooth in the tool axis direction at a portion located the nearest to one end of the processing tooth in the tool axis direction is brought into contact with the gear workpiece, and the tool and the gear workpiece are meshed and rotated, so as to grind, over the entire circumference of the gear workpiece, one corner portion of four corners of a tooth surface of the gear workpiece which is an end portion of the tooth surface in the workpiece radial direction and a tooth trace direction, and
wherein the tooth surface grinding control and the corner portion grinding control are executed at different timings.
